Europäisches Patentamt

**European Patent Office**

Office européen des brevets

(19)

(11) Numéro de publication: **0 215 997**
**B1**

(12) **FASCICULE DE BREVET EUROPEEN**

(45) Date de publication du fascicule du brevet:
14.03.90

(51) Int. Cl.⁴: **C04B 35/00,** C04B 35/18,
C04B 35/66

(21) Numéro de dépôt: **85870123.8**

(22) Date de dépôt: **02.09.85**

(54) **Produit réfractaire fabriqué sans cuisson, à haute résistance.**

(43) Date de publication de la demande:
**01.04.87 Bulletin 87/14**

(45) Mention de la délivrance du brevet:
**14.03.90 Bulletin 90/11**

(84) Etats contractants désignés:
**AT BE CH DE FR GB IT LI LU NL SE**

(56) Documents cités:
**EP-A- 0 087 825**
**EP-A- 0 158 895**
**GB-A- 370 864**
**GB-A- 2 096 985**
**US-A- 1 851 181**

**CHEMICAL ABSTRACTS,**
**vol. 96, no. 2, janvier 1982, page 273, no. 10777e,**
**Columbus, Ohio, US; & JP - A - 81 88 869 (MATSUSHITA**
**ELECTRIC WORKS LTD.) 18-07-1981**

(73) Titulaire: **Compagnie Wallonne des Produits**
**Réfractaires, "Walref", rue du Bosquet, 130,**
**B-7432 Jurbise (Masnuy-Saint-pierre)(BE)**

(72) Inventeur: **Deffrane, Michel, rue Warde 18,**
**B-7901 Thieulain (Leuze)(BE)**

(74) Mandataire: **Callewaert, Jean et al, Bureau Gevers S.A.**
**rue de Livourne 7 bte 1, B-1050 Bruxelles(BE)**

**Description**

La présente invention est relative à un procédé de fabrication d'un produit réfractaire destiné à être soumis à une opération de frittage et contenant comme ingrédients réfractaires notamment de l'argile réfractaire et/ou de l'hydrate d'alumine ainsi qu'un liant pour ces ingrédients comprenant une résine synthétique tel que défini dans le préambule de la revendication 1.

Il s'agit plus particulièrement de produits réfractaires de maçonnerie, tels que briques, dalles, pièces diverses, béton et mortier réfractaires.

Jusqu'à présent, la fabrication de produits traditionnels moulés, tels que briques, dalles, etc..., comporte, après le séchage, une cuisson à une température supérieure à 1000°C, dont le but essentiel est de conférer à ces produits une résistance mécanique suffisante pour pouvoir être transportés, manipulés et mis sous charge.

Cette opération de cuisson influence considérablement le coût de la fabrication de ces produits réfractaires.

Il a été possible de remédier à cet inconvénient par l'emploi, sur les lieux, de bétons hydrauliques avec des ciments de plus en plus alumineux, formant donc des bétons de plus en plus réfractaires.

Toutefois, lors de l'emploi d'un tel béton, la haute résistance à la compression à température ordinaire décroît, lorsque ce béton est soumis à des températures relativement élevées, par suite de la destruction des liaisons hydrauliques à température élevée.

Ainsi, on constate, généralement à partir d'une température de l'ordre de 300 à 500°C, que la cohésion des ingrédients de ces bétons a pratiquement disparu, de sorte que leur résistance reste insuffisante aussi longtemps que la température de frittage n'a pas été atteinte.

A cette température, la cohésion se reformera et augmentera avec la teneur en oxyde de calcium.

Toutefois, la présence de cet oxyde de calcium, qui constitue en fait un fondant, diminue les propriétés réfractaires des bétons.

De plus, la présence indispensable d'oxyde de calcium, dans ces bétons hydrauliques, pour obtenir la cohésion initiale du béton à température ordinaire, a pour résultat un produit réfractaire présentant une forte réactivité vis-à-vis de milieux acides.

D'autres liants que ces liants plus ou moins alumineux ont été envisagés, tels que l'acide phosphorique, des silicates, des mélasses, des résines synthétiques, notamment des résines phénoliques.

Plus particulièrement, les documents EP-A 0 158 895, GB-A 2 096 985 et EP-A 0 087 825 (date de publication: 23.10.85) décrivent l'utilisation de tels liants pour la fabrication de produits réfractaires.

Ces liants présentent l'inconvénient que leurs propriétés liantes et, par conséquent, la résistance mécanique des produits réfractaires contenant ces liants, disparaissent très vite lors d'une augmentation de la température, bien avant de la température de frittage des ingrédients réfractaires.

Ceci a comme conséquence que les propriétés réfractaires des masses en béton ou des produits moulés, tels que briques, ainsi obtenus sont, pour une même nature d'agrégats liés, tels que chamotte, mullite, corindon, magnésie, carbure de silicium, etc..., toujours inférieures à celles ayant subi une cuisson contrôlée conventionnelle en usine, c'est-à-dire sur le lieu de fabrication.

Par ailleurs, dans Chemical Abstracts, Vol. 96, n° 2, janvier 1982, il est fait mention de la préparation d'un produit réfractaire en utilisant le monophosphate d'aluminium en combinaison avec une résine phénolique dans une composition comprenant des ingrédients réfractaires au cours de laquelle il fallait chauffer cette composition en deux étapes pendant un temps relativement long pour obtenir un produit réfractaire présentant des propriétés mécaniques satisfaisantes.

Le document US-A 1 851 181 décrit des ingrédients réfractaires présentant une discontinuité granulométrique qui mène à un minimum de retrait de cuisson, mais qui, du fait de l'absence d'argile liante, nécessite des pressions élevées pour obtenir un produit réfractaire d'une résistance mécanique satisfaisante.

Un des buts essentiels de la présente invention est de présenter un procédé de fabrication d'un produit réfractaire dont les propriétés mécaniques restent au moins constantes, mais, d'une façon générale, accroissent progressivement lors d'une augmentation de la température à partir de la température ambiante jusqu'à la température de frittage sans retrait et ceci donc sans passer par une zone intermédiaire, comme c'est le cas avec les produits réfractaires connus, où les propriétés liantes des liants utilisés diminuent considérablement ou disparaissent même, de manière à ne pas nécessiter de cuisson en usine mais pouvant être transportés et utilisés directement sur place, c'est-à-dire dans la construction de fours ou analogues, éventuellement après une opération de séchage.

A cet effet, le procédé suivant l'invention consiste à utiliser, comme catalyseur, un monophosphate d'un métal amphotère formant, sous l'effet de la chaleur, un oxyde réfractaire et comme résine une résine phénolique réactive, comprenant des groupements $-CO_2OH$, se durcissant à température ambiante sous l'effet du catalyseur précité.

Suivant une forme de réalisation particulière de l'invention, on utilise comme catalyseur du monophosphate d'aluminium.

D'autres détails et particularités de l'invention ressortiront de la description, donnée ci-après, à titre d'exemples non limitatifs, de quelques formes de réalisation particulières du procédé suivant l'invention.

Pour la préparation d'un produit réfractaire classique il a généralement lieu de distinguer trois étapes essentielles: le formage ou moulage de la pâte réfractaire, le séchage des produits moulés pour éliminer la partie essentielle de l'eau libre et la cuisson de ces produits.

Lors de la cuisson d'un produit réfractaire présentant une composition conventionnelle d'ingrédients réfractaires, on constate essentiellement trois phases distinctes à savoir: l'élimination de l'eau de cristallisation, la destruction de la cohésion entre les ingrédients et le frittage de ces ingrédients.

Dans la première phase, les traces d'eau libre qui n'ont pas été éliminées lors de l'opération de séchage et l'eau de cristallisation sont éliminées au fur et à mesure de l'augmentation de la température jusque 200 à 300°C.

Dans la deuxième phase, à partir d'une température de l'ordre de 300°C, c'est-à-dire au moment où toute l'eau a été éliminée, les liaisons entre les particules des ingrédients sont déterminées par le type de liant utilisé. Ainsi, comme déjà signalé ci-dessus, si on fait usage d'un liant classique, tel que l'oxyde de calcium, dans les bétons hydrauliques, on constate que dans cette deuxième phase le liant perd ses propriétés collantes et la résistance à la compression décroît ainsi considérablement dans cette phase par suite de la disparition de la plupart de ces liaisons.

Dans la troisième phase, vers une température de l'ordre de 1100°C, un nouveau phénomène se produit et on constate une augmentation de la cohésion. Ceci est obtenu grâce au frittage d'au moins certains des ingrédients du produit réfractaire.

Ainsi, à la fin de la cuisson, grâce à ce frittage, on obtient un produit réfractaire présentant une bonne résistance à la compression.

Il est donc très important que, si on fait usage d'un liant qui disparaît ou perd ses propriétés collantes au cours de la deuxième phase de la cuisson, la totalité du produit réfractaire puisse être amenée au moins à la température de frittage dans la troisième phase, afin d'assurer sur toute sa section, après cuisson, la cohésion et la résistance voulue à la compression.

Des problèmes pourraient ainsi se poser si on fait usage d'un béton réfractaire hydraulique coulé sur place ou de blocs réfractaires, qui ont uniquement subi un séchage à température ambiante, pour la construction de fours ou constructions analogues.

En effet, dans un tel cas, les parties extérieures et même centrales de la paroi réfractaire ainsi réalisée du four n'atteignent jamais la température de frittage, de sorte qu'à ces endroits le béton et les blocs présentent généralement une faible résistance à la compression. Surtout la partie centrale d'une telle paroi, n'ayant été cuite au cours du fonctionnement du four que jusqu'à la deuxième phase, ne présente en général aucune cohésion.

Pour de tels fours la résistance à la compression se limite donc à celle de la partie intérieure de la paroi ayant donc atteint cette température de frittage.

Cette résistance est, dans la plupart des cas, insuffisante et le risque existe qu'un tel four se détériore rapidement.

Par ailleurs, un autre point essentiel est celui du retrait et de l'évacuation rapide et graduelle de l'eau lors de la cuisson et du frittage du béton coulé sur place et des blocs réfractaires non cuites utilisés pour la construction de fours.

Il va de soi qu'il est extrêmement important que ce retrait soit pratiquement inexistant pour éviter la fissuration des parois et que tout l'eau soit évacuée avant qu'une température relativement élevée soit atteinte, ceci pour éviter l'éclatement du béton ou des blocs.

Il faut donc que la structure interne et la porosité du béton et des blocs permettent, d'une part, à l'eau de s'échapper facilement et, d'autre part, d'être suffisamment dense pour éviter le retrait et assurer une étanchéité suffisante après cuisson.

Un des buts de la présente invention est de présenter un produit réfractaire non cuit permettant d'éviter les problèmes soulevés ci-dessus et d'obtenir plus particulièrement un produit qui ne subit pratiquement aucun retrait lors de sa cuisson.

Ce produit comprend des ingrédients réfractaires, tels que de l'argile réfractaire et/ou de l'hémihydrate d'alumine, dont 55 à 70% en poids sont constitués par des grains présentant un diamètre moyen compris entre 1 et 6 mm, de préférence de l'ordre de 3 à 4 mm, et dont 30 à 45% sont constitués par des grains présentant un diamètre moyen inférieur à 0,2 mm.

Il a, en effet, été constaté que si les ingrédients réfractaires présentent cette discontinuité granulométrique, il est possible de préparer une pâte très compacte ne présentant pratiquement pas de retrait de cuisson, tout en permettant une évacuation efficace de l'eau, qu'elle contient, lors du séchage et essentiellement du début de la cuisson.

Cette discontinuité granulométrique consiste donc essentiellement à supprimer au maximum les grains ayant un diamètre moyen compris entre 0,2 et 1 mm. Il faut en pratique que la teneur de tels grains soit maintenue en-dessous de 10% et même en-dessous de 5%.

La présence de ces grains provoque un manque de tassement des ingrédients réfractaires granulaires et, par conséquent, un fort retrait lors de la cuisson.

Par contre, si la granulométrie des ingrédients réfractaires répond aux conditions définies ci-dessus, les pâtes préparées à l'aide de ces ingrédients offrent à la fois un très bon tassement, un minimum de porosité, un minimum de retrait de cuisson et une excellente résistance aux chocs thermiques.

De plus, l'incorporation de particules ultrafines, inférieures au micron (μm), permet d'accroître davantage l'effet de tassement en comblant les microvides et en rendant les grains du mélange plus mobiles lors du pressage. On obtient donc ainsi un meilleur compactage.

Par ailleurs, pour obtenir à froid, c'est-à-dire sans cuisson, un produit moulé d'une consistance suffisante et d'une résistance mécanique qui soient telles à permettre la manipulation, l'empilage et le transport des produits moulés après séchage, le produit réfractaire suivant l'invention contient, en outre, un liant pour ces ingrédients constitué essentiellement par une résine synthétique durcissant à température ambiante de l'ordre de 15 à 35°C, sous l'action d'un catalyseur bien déterminé, présentant un faible coefficient de dilatation, et formant des chaînes relativement stables de carbone, notamment de graphite lors de son chauffage, en mélange avec les ingrédients réfractaires au moins jusqu'au moment où la température de frittage de ce dernier lors de la cuisson.

Il a été constaté qu'un liant qui répond à toutes ces conditions est constitué par les résines phénoliques réactives.

La teneur de cette résine dans le produit réfractaire est avantageusement de l'ordre de 0,5 à 6% en poids et de préférence de 1 à 4%.

Suivant l'invention, le catalyseur précité contient un monophosphate d'un métal amphotère, formant sous l'effet de la chaleur un oxyde réfractaire.

A cet égard, des résultats très favorables ont été obtenus avec du monophosphate d'aluminium.

Ce monophosphate est généralement utilisé en milieu aqueux sous forme d'une solution à 50% environ.

Il a été constaté que ce catalyseur spécifique permet d'obtenir non seulement la prise rapide à température ambiante de la résine, mais, surtout de maintenir et même améliorer les propriétés liantes jusqu'au frittage. De plus, ce catalyseur permet d'améliorer considérablement, lors de l'opération de frittage, les caractéristiques du produit réfractaire, telles que par exemple la résistance à la compression à froid.

Un autre avantage très important est le fait que les produits de décomposition du monophosphate d'aluminium, qui sont constitués essentiellement par du $Al_2O_3$ et du $P_2O_5$, sont non toxiques. Au contraire, grâce à la présence du $Al_2O_3$, on obtient même de meilleurs propriétés réfractaires. Le $P_2O_5$ étant volatil à 1500°C, celui-ci est donc évacué lors de frittage.

Ces avantages sont généralement obtenus lorsque le produit réfractaire contient au moins 1% en poids et notamment de 1 à 5% du monophosphate par rapport à la teneur en matières sèches. En théorie, étant donné que le catalyseur utilisé n'est pas toxique, il n'y a pas de limite critique supérieure, du moins du point de vue technique, de sa teneur dans le produit réfractaire.

Par le fait que, comme signalé ci-dessus, le liant forme des chaînes relativement stables de carbone en mélange avec les ingrédients réfractaires à la température de frittage de ce dernier, il permet d'assurer ainsi le lien suffisamment important entre les différentes particules des ingrédients lors du passage de la première phase à la troisième phase de la cuisson.

La résine utilisée est avantageusement une résine phénolique du type décrit dans l'encyclopédia of chemical technology, vol. 15, seconde édition – John Wiles and Sons, Inc.

En résumé, lors de la condensation d'un composé à fonction phénolique (phénol, crésol, xylénol, alkylphénol, etc...) avec le formol (formaldéhyde) ou autre aldéhyde, l'aldéhyde alcoolise le noyau phénolique. Ces fonctions "alcool" pourront:

a) se conserver ($-CH_2OH$), ce qui conduit à des résines réactives du type résol qui peuvent durcir par action catalytique et sans obligatoirement l'action de la chaleur;

b) se déshydrater et donner des résines non-réactives solides (novolak) qui, pour certains types de phénols, ne deviendront thermodurcissables qu'avec l'aide d'un durcisseur tel que l'hexaméthylènetétramine.

Dans tous les cas, la prise des résines du type (b), nécessitera un apport calorifique important. Par contre, les résines du type (a) offrent une prise à température ambiante par simple action d'un catalyseur. C'est donc ce type de résine (a) qui sera utilisé pour la présente invention.

Un critère essentiel est qu'elles continuent à exercer un certain effet de liaison au-delà du seuil de frittage du produit réfractaire avec lequel elles sont associées.

Par ailleurs, ces liants peuvent se présenter à température ordinaire à l'état liquide ou en solution, ou encore à l'état solide sous forme poudreuse ou granuleuse.

Ainsi, à l'état solide, il peut être mélangé, éventuellement ensemble avec un catalyseur granuleux ou poudreux, aux ingrédients secs réfractaires se présentant également sous une forme granuleuse.

Ce mélange contenant donc le liant peut être destiné à la fabrication d'un produit réfractaire moulé ou d'un béton réfractaire destiné à être coulé sur place. Il suffit alors d'ajouter la quantité d'eau nécessaire pour rendre le produit apte à être moulé ou pompé p.e.

Le procédé, suivant l'invention, pour la fabrication de produits réfractaires moulés destinés à être soumis à une opération de frittage peut consister à mélanger d'abord les ingrédients réfractaires avec une quantité d'eau et du liant se présentant sous forme liquide, en solution aqueuse ou sous forme poudreuse ou granuleuse, et du catalyseur précité de manière à obtenir une pâte dit "dure" dans laquelle le liant est réparti d'une manière sensiblement homogène.

Cette pâte doit en fait avoir une consistance suffisante pour permettre son moulage sans effritement et sans déformation sensible sous son propre poids.

Ensuite, après la mise en forme de cette pâte, par exemple sous forme de briques, dalles etc..., on soumet les produits démoulés éventuellement à une opération de séchage normale qui voit le durcissement du liant à une température de l'ordre de 15 à 50°C, de préférence de l'ordre de 20 à 35°C, pendant environ 24 heures, de manière à former des produits présentant des propriétés mécaniques suffisantes pour être transportés et être mis en œuvre, c'est-à-dire utilisés dans la construction de fours par exemple.

Il est important de noter que le séchage, après la mise en forme, devra être effectué avec le plus grand soin pour éviter la formation de poches humides enveloppées par des films sensiblement imperméables; ceci provoquerait l'explosion des produits lors de leur mise à température d'emploi.

De plus, pour permettre à l'eau de s'évaporer facilement lors de cette opération de séchage, il est important de contrôler la répartition granulométrique des mélanges d'ingrédients réfractaires et surtout le rapport entre la quantité d'ingrédients gros et d'ingrédients fins, comme déjà signalé ci-dessus.

En effet, lorsque la teneur en ingrédients à granulométrie fine est trop importante, les risques de formation de films imperméables à la vapeur d'eau sont plus grands.

Ainsi, il a été constaté que l'on peut obtenir une évacuation d'eau très poussée lors de l'opération de séchage si le mélange d'ingrédients réfractaires répond à la répartition granulométrique discontinue telle que définie ci-dessus.

Cette répartition granulométrique a été illustrée par le diagramme ternaire annexé dans lequel le sommet A, représente une granulométrie avec 100% de grains d'un diamètre moyen supérieur à 1 mm, B représente une granulométrie avec 100% de grains d'un diamètre moyen inférieur 0,2 mm et C représente une granulométrie avec 100% de grains d'un diamètre compris entre 0,2 et 1 mm.

La courbe en traits interrompus 1 donne l'évolution granulométrique obtenue par broyage, en fonction du temps, d'une substance dont la granulométrie est représentée par le point a, qui définit donc le début du broyage.

On constate, comme on pourrait s'y attendre bien entendu, que la granulométrie diminue au fur et à mesure de la progression du broyage pour obtenir après un certain temps un produit constitué uniquement par des grains d'un diamètre inférieur à 0,2 mm et représente par le point B.

La granulométrie des ingrédients réfractaires du produit, suivant l'invention, se situe dans la zone hachurée délimitée par la courbe 2. On constate donc qu'il ne suffit pas simplement de régler le temps de broyage pour obtenir des ingrédients répondant à la granulométrie de la zone délimitée par cette courbe 2, mais que des opérations de tamisage et de triage s'imposent.

La courbe 3, délimite une zone hachurée de grains dont la granulométrie a comme résultat de former un produit réfractaire avec un minimum de porosité, mais, par contre, avec un retrait très important, de sorte que ce produit ne convient pas pour la fabrication des blocs ou briques réfractaires utilisés, sans cuisson préalable, dans la construction de fours.

Par ailleurs, des ingrédients réfractaires, dont la granulométrie se localise dans la zone délimitée par la courbe 4, donnent naissance à un produit réfractaire qui est très poreux et qui présente un grand retrait.

Pour la répartition d'une pâte d'ingrédients réfractaires convenant au moulage celle-ci peut, par exemple, contenir de l'ordre de 1 à 3% d'eau et de l'ordre de 0,5 à 6%, de préférence 1 à 4% du liant suivant l'invention.

Il y a encore lieu de noter qu'il a été constaté, suivant l'invention, que la résine phénolique essentiellement monomère et en solution aqueuse du type résol est très réactive lorsqu'elle est mélangée aux ingrédients réfractaires.

Ceci permet d'obtenir la prise de cette résine à température ambiante par simple réaction du catalyseur, qui est obligatoirement un acide (pH inférieur à 4, de préférence de l'ordre de 2,2). Cette propriété offre une large possibilité d'utilisations sans contrainte quant à la température à atteindre pour obtenir une prise correcte. En effet, il suffit d'adapter la concentration du catalyseur (faire varier le pH) pour agir sur le temps de prise en fonction de la température ambiante.

Au cours du séchage, l'augmentation de température, facultative pour la réalisation de la prise, permettra l'évacuation de l'eau et ne pourra qu'améliorer les propriétés des produits.

Ce type de résine phénolique est très compatible avec les pâtes humides usuellement employées, et est toujours beaucoup moins coûteux que les autres apparentés (novolak, hexa etc...).

De plus, la réactivité due aux groupements $-CH_2OH$ conservés permet une polymérisation sans apport calorifique obligatoire.

Dès lors, les résines du type résol aqueux sont les seules phénoliques à offrir actuellement un prise à température ambiante (réglable) et, par conséquent, pour la réalisation de pisés, masses à damer, bétons etc... sont de loin les plus pratiques et performantes.

Ces résols ont comme avantage que des quantités relativement réduites d'une telle résine peuvent être utilisées, influençant ainsi très favorablement la qualité du produit fini obtenu, notamment pour ce qui concerne ses propriétés réfractaires.

Ci-après sont donnés quelques exemples de réalisations concrètes de produits réfractaires permettant d'illustrer davantage l'objet de l'invention.

### Exemple 1

On prépare d'abord un mélange des ingrédients réfractaires suivants:

200 Kgs Andalousite (1 à 3 mm; 60% $Al_2O_3$, 1,2% $Fe_2O_3$, 38,8% $SiO_2$)

100 Kgs Andalousite (0–0,160 mm) 50 Kgs de corindon (99,9% $Al_2O_3$)

25 Kgs argile réfractaire dite "allemande" (granulométrie inférieure à 1,0 mm, mais 80% inférieur à 0,5 mm; 36,3% $Al_2O_3$, 1,5% $TiO_2$, 2,3% $Fe_2O_3$; perte au feu: 10,6%).

15 Kgs argile réfractaire dite "française" du bassin des Charentes (37% $Al_2O_3$, 45,4% $SiO_2$, 1,5% $Fe_2O_3$, 1,6% $TiO_2$, 0,05% $Na_2O$, 0,2% $K_2O$, 0,2% de CaO, 0,1% MgO; perte au feu: 13,8%; granulométrie: Refus cumulés sur tamis d'ouverture de 0,10 micron: 0%, 100 microns: 0,1%, 50 microns: 0,8%).

Ce mélange d'ingrédients est mouillé avec 1,2% d'eau.

La quantité de résines ajoutées est de 7,5 L et est formée d'une résine phénolique, résol aqueux. Il s'agit de la résine 6.23-27 référence commerciale 55-47.33 de la Société Française "La Bakelite".

La viscosité de cette résine à 20°C est de 100 à 150 cps (m Pa s).

Elle se présente sous forme d'une solution aqueuse à 83% de résine, contenant 8% de phénol libre et moins de 0,5% de formol libre.

Après avoir formé un mélange homogène de cette résine avec les ingrédients on ajoute 9 l d'un catalyseur, formé par du monophosphate d'aluminium à 50% de matière active en milieu aqueux.

Ensuite, dans un stade suivant, des briques sont façonnées à la presse de la façon traditionnelle.

Après démoulage, ces briques sont alors soumises à un séchage normal à une température de 20 à 35°C pendant environ 24 heures.

Les briques non-cuites ainsi obtenues, après séchage et durcissement du liant présentent une résilience suffisante pour pouvoir être transportées et mises en charge.

Ces briques ont été ensuite cuites suivant le procédé traditionnel et on constate que les briques préparées suivant l'invention présentent les mêmes propriétés réfractaires que celles préparées avec le même mélange d'ingrédients réfractaires suivant le procédé traditionnel.

Ceci prouve donc la neutralité de la résine utilisée vis-à-vis des qualités réfractaires des briques.

Exemple 2

On prépare un mélange d'ingrédients réfractaires répondant à la formulation suivante:
500 Kgs de chamotte française broyée 1–3 mm
350 Kgs de chamotte française broyée 0–0,2 mm
La chamotte ci-dessus correspond à l'analyse suivante:
$SiO_2$ 53,6%, $Al_2O_3$ 42,2%, $Fe_2O_3$ 1,7%, $TiO_2$ 1,7%, $K_2O$ 0,2%, $Na_2O$ 0,1%, $CaO$ 0,2%, $MgO$ 0,1%.
150 Kgs d'argile réfractaire allemande de l'exemple 1.

Ce mélange mouillé avec 2% d'eau se voit ajouter 20 l de résine 6.23 et 15 l d'un catalyseur, formé du monophosphate d'aluminium en solution aqueuse (50% subst. active).

On obtient ainsi un produit silico-alumineux contenant de 40 à 42 pourcents d'alumine.

La mise en forme a lieu comme dans l'exemple 1.

Les briques non-cuites obtenues, après séchage et durcissement du liant, présentent également une résilience suffisante pour être transportées et mises en charge.

Après cuisson, suivant le procédé traditionnel, les briques présentent les mêmes propriétés que dans l'exemple 1.

Exemple 3

On prépare un mélange d'ingrédients réfractaires répondant à la formulation suivante:
450 Kgs de SiC min. 98% de SiC (solde $SiO_2$) T. 14 spécial (66%> 1 mm; 33%< 0,3 mm, dont 85%> 0,1)
50 Kgs d'argile réfractaire des Charentes de l'exemple 1
Mouillage avec 1,75% d'eau
Ajoute de 10 l de résine 6.23.27
plus 8 l de catalyseur, formé par du monophosphate (50% subst. active en une solution aqueuse).

La mise en forme a également lieu comme dans l'exemple 1 et les briques non-cuites et cuites présentaient également des propriétés réfractaires équivalentes.

Enfin, on constate encore, après le frittage des briques, que pratiquement tout le liant est parti et que la composition des briques ainsi que leurs propriétés sont identiques à celles des briques préparées suivant des procédés traditionnels.

En conclusion, grâce au liant et au procédé suivant l'invention on évite, pour la fabrication des produits réfractaires moulés, la cuisson en usine et, pour la préparation de produits réfractaires à couler sur place, notamment du béton réfractaire, on obtient des produits présentant une résistance et stabilité mécaniques très importantes à température ambiante, qui se maintiennent indépendamment du traitement thermique subi.

Ainsi, dans un four, les parties des produits réfractaires n'ayant pas été chauffés jusqu'à la température de frittage présentent une résistance mécanique équivalente à celle des parties frittées.

Il est encore important de noter que par le fait que l'on fait usage, comme catalyseur, de monophosphate d'aluminium, la teneur en eau a une grande influence sur l'activité de celui-ci et il a ainsi été constaté que généralement cette teneur en eau ne peut pas dépasser 2% par rapport à la matière sèche.

A température ambiante, le temps de polymérisation ou de durcissement de la résine est dans ce cas de l'ordre de 35 minutes.

Il est bien entendu que l'invention n'est pas limitée aux différentes formes de réalisation décrites ci-dessus de produits réfractaires et des procédés appliqués pour la fabrication de ces produits réfractaires.

C'est ainsi qu'en fait toute résine phénolique réactive peut convenir dont les propriétés répondent à celles définies dans la revendication 1, à condition bien entendu qu'il ne dégage pas, lors de sa décomposition, des produits corrosifs qui risquent d'attaquer les parties métalliques du four, et que la quantité nécessaire peut être maintenue en dessous de 10% et de préférence 6% par rapport à la quantité d'ingrédients réfractaires.

Par ailleurs, la composition des ingrédients réfractaires à utiliser peut également varier entre de fortes limites. Il suffit qu'elle réponde sensiblement à la granulométrie discontinue définie ci-dessus et qu'elle contienne des matières pouvant par adhérence de grains à une température inférieure à celle de leur fusion, acquérir une cohésion suffisante pour conférer aux produits la résistance mécanique nécessaire.

Généralement, il suffit que le produit contienne une argile réfractaire ou des produits plus nobles, par exemple des hydrates d'alumine, pour pouvoir être fritté à la température d'utilisation.

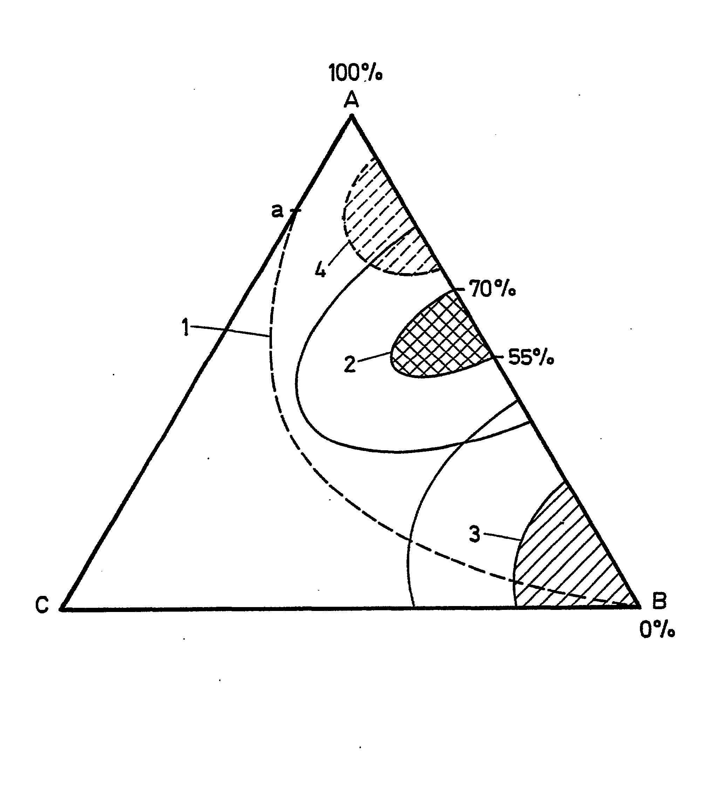

**Revendications**

1. Procédé de fabrication d'un produit réfractaire, destiné à être soumis à une opération de frittage, et contenant comme ingrédients réfractaires, notamment de l'argile réfractaire et/ou de l'hydrate d'alumine, comprenant un liant pour ces ingrédients constitué par une résine phénolique et en catalyseur de durcissement, ce procédé étant caractérisé en ce que l'on utilise comme catalyseur un monophosphate d'un métal amphotère formant, sous l'effet de la chaleur, un oxyde réfractaire et comme résine une résine phénolique réactive, comprenant des groupements $-CH_2OH$, se durcissant à température ambiante sous l'effet du catalyseur précité.

2. Procédé suivant la revendication 1, caractérisé en ce qu'on utilise la résine en solution aqueuse.

3. Procédé suivant l'une ou l'autre des revendications 1 et 2, caractérisé en ce que l'on utilise comme catalyseur du monophosphate d'aluminium.

4. Procédé suivant l'une quelconque des revendications 1 à 3, caractérisé en ce qu'on ajoute au moins 1%, de préférence 1 à 5%, du monophosphate par rapport à la teneur en matières sèches.

5. Procédé suivant l'une quelconque des revendications 1 à 4, caractérisé en ce qu'on utilise un monophosphate présentant un pH inférieur à 4, de préférence de l'ordre de 2,2.

6. Procédé suivant l'une quelconque des revendications 1 à 5, caractérisé en ce qu'on utilise une résine phénolique réactive du type résol.

7. Procédé suivant l'une quelconque des revendications 1 à 6, caractérisé en ce qu'on utilise, en mélange avec les ingrédients réfractaires, entre 0,5 et 6% en poids, de préférence de 1 à 4%, du liant précité.

8. Procédé suivant l'une quelconque des revendications 1 à 7, caractérisé en ce qu'on utilise le liant en solution dans de l'eau, de préférence avec une concentration de l'ordre de 2%.

9. Procédé suivant l'une quelconque des revendications 1 à 8, caractérisé en ce qu'on utilise au moins 1% en poids, de préférence 1 à 5%, du monophosphate par rapport à la teneur en matières sèches.

10. Procédé suivant l'une quelconque des revendications 1 à 9, caractérisé en ce qu'il consiste à mélanger les ingrédients réfractaires avec une quantité d'eau et de liant tel que défini dans l'une des revendications précédentes, de manière à obtenir une pâte d'une consistance suffisante pour permettre son moulage sans effritement et sans déformation sensible sous son propre poids, et à soumettre le mélange ainsi obtenu à une opération de séchage naturelle ou forcée qui voit le durcissement dudit liant, de manière à former un produit présentant des propriétés mécaniques suffisantes pour être transporté et/ou être mis en œuvre.

11. Procédé suivant l'une des quelconques revendications 1 à 10, caractérisé en ce que l'on mélange d'abord la résine en solution aqueuse aux ingrédients réfractaires jusqu'à obtenir un mélange sensiblement homogène et à ce que l'on y mélange ensuite le catalyseur sous forme d'une solution aqueuse.

12. Procédé suivant l'une ou l'autre des revendications 10 et 11, caractérisé en ce que l'opération de séchage est effectuée à une température de 15 à 50°C, de préférence 20 à 35°C, pendant environ 24 heures jusqu'à éliminer pratiquement toute l'eau libre.

13. Procédé suivant l'une quelconque des revendications 1 à 12, caractérisé en ce qu'on utilise des ingrédients réfractaires dont 55% à 70% en poids sont constitués par des grains présentant un diamètre moyen compris entre 1 et 6 mm et dont 30 à 45% sont constitués par des grains présentant un diamètre moyen inférieur à 0,2 mm, moins de 10% en poids des ingrédients réfractaires étant constitués par des grains présentant un diamètre moyen compris entre 0,2 et 1 mm.

14. Produit réfractaire susceptible d'être obtenu par le procédé tel que décrit dans l'une quelconque des revendications 1 à 13.

**Claims**

1. A process for the manufacture of a refractory product intended to be subjected to a sintering operation, and containing, as refractory ingredients, more particularly refractory clay and/or alumina hydrate, comprising a binder for said ingredients in the form of a phenolic resin and a hardening catalyst, said process being characterised in that the catalyst used is a monophosphate of an amphoteric metal which in response to heat forms a refractory oxide and the resin used is a reactive phenolic resin containing $-CH_2OH$ groups which hardens at ambient temperature under the effect of the said catalyst.

2. A process according to claim 1, characterised in that the resin is used in aqueous solution.

3. A process according to either of claims 1 and 2, characterised in that the catalyst used is aluminium monophosphate.

4. A process according to any one of claims 1 to 3, characterised in that at least 1%, and preferably 1 to 5%, of the monophosphate is added with respect to the dry substance content.

5. A process according to any one of claims 1 to 4, characterised in that a monophosphate is used which has a pH below 4 and preferably of the order of 2.2.

6. A process according to any one of claims 1 to 5, characterised in that a reactive phenolic resin of the resol type is used.

7. A process according to any one of claims 1 to 6, characterised in that between 0.5 and 6% by weight, and preferably from 1 to 4%, of the said binder is used in mixture with the refractory ingredients.

8. A process according to any one of claims 1 to 7, characterised in that the binder is used in solution in water, preferably in a concentration of the order of 2%.

9. A process according to any one of claims 1 to 8, characterised in that at least 1% by weight and preferably 1 to 5% of the monophosphate is used with respect to the dry substance content.

10. A process according to any one of claims 1 to 9, characterised in that it comprises mixing the refractory ingredients with a quantity of water and binder as defined in one of the preceding claims so as to form a paste of a consistency sufficient to allow its moulding without crumbling and without appreciable deformation under its own weight and subjecting the resulting mixture to a natural or forced drying operation which results in hardening of said binder so as to form a product having mechanical properties sufficient for transportation and/or processing.

11. A process according to any one of claims 1 to 10, characterised in that the resin is first mixed in aqueous solution with the refractory ingredients to give a substantially homogeneous mixture and in that the catalyst is then mixed therein in the form of an aqueous solution.

12. A process according to either of claims 10 and 11, characterised in that the drying operation is carried out at a temperature from 15 to 50°C, and preferably 20 to 35°C, for about 24 hours to eliminate practically all the free water.

13. A process according to any one of claims 1 to 12, characterised in that refractory ingredients are used in which 55 to 70% by weight is in the form of grains having an average diameter of between 1 and 6 mm, and in which 30 to 45% comprises grains having an average diameter below 0.2 mm, less than 10% by weight of the refractory ingredients being in the form of grains having an average diameter of between 0.2 and 1 mm.

14. A refractory product capable of being produced by the process as described in any one of claims 1 to 13.

## Patentansprüche

1. Verfahren zur Herstellung eines feuerfesten Erzeugnisses, das bestimmt ist, einer Sinterbehandlung unterzogen zu werden und als feuerfeste Bestandteile insbesondere feuerfesten Ton und/oder Aluminiumhydrat enthält, umfassend ein Bindemittel für diese Bestandteile, welches von einem Phenolharz und einem Härtekatalysator gebildet wird, wobei das Verfahren dadurch gekennzeichnet ist, daß man als Katalysator ein Monophosphat eines amphoteren Metalls verwendet, welches unter Hitzeeinwirkung ein feuerfestes Oxyd bildet, und als Harz ein $CH_2OH$-Gruppen enthaltendes reaktives Phenolharz verwendet, welches unter der Einwirkung des genannten Katalysators bei Raumtemperatur härtet.

2. Verfahren nach Anspruch 1, dadurch gekennzeichnet, daß man das Harz in wäßriger Lösung verwendet.

3. Verfahren nach einem der Ansprüche 1 und 2, dadurch gekennzeichnet, daß man als Katalysator Aluminiummmonophosphat verwendet.

4. Verfahren nach einem der Ansprüche 1 bis 3, dadurch gekennzeichnet, daß man wenigstens 1% vorzugsweise 1–5% des Monophosphats, bezogen auf den Trockensubstanzgehalt, zusetzt.

5. Verfahren nach einem der Ansprüche 1 bis 4, dadurch gekennzeichnet, daß man ein Monophosphat verwendet, welches einen pH von weniger als 4, vorzugsweise von ungefähr 2,2 ergibt.

6. Verfahren nach einem der Ansprüche 1 bis 5, dadurch gekennzeichnet, daß man ein reaktives Phenolharz vom Resoltyp verwendet.

7. Verfahren nach einem der Ansprüche 1 bis 6, dadurch gekennzeichnet, daß man im Gemisch mit den feuerfesten Bestandteilen zwischen 0,5 und 6 Gew.%, vorzugsweise zwischen 1 und 4% des genannten Bindemittels verwendet.

8. Verfahren nach einem der Ansprüche 1 bis 7, dadurch gekennzeichnet, daß man das Bindemittel in wäßriger Lösung, vorzugsweise mit einer Konzentration von ungefähr 2% verwendet.

9. Verfahren nach einem der Ansprüche 1 bis 8, dadurch gekennzeichnet, daß man wenigstens 1 Gew.%, vorzugsweise 1–5% bezüglich des Trockensubstanzgehaltes, an Monophosphat verwendet.

10. Verfahren nach einem der Ansprüche 1 bis 9, dadurch gekennzeichnet, daß es besteht aus dem Mischen der feuerfesten Bestandteile mit einer Menge von Wasser und Bindemittel wie in einem der vorstehenden Ansprüche definiert, in solcher Weise, daß eine Paste erhalten wird, deren Konsistenz ihre Formung ohne Abbröckeln und ohne Verformung unter dem eigenen Gewicht gestattet, und dem Unterziehen der so erhaltenen Mischung unter einen natürlichen oder erzwungenen Trocknungsvorgang, bei dem die Härtung des genannten Bindemittels erfolgt, so daß ein Erzeugnis erhalten wird, das hinreichende mechanische Eigenschaften aufweist, um bewegt und/oder bearbeitet zu werden.

11. Verfahren nach einem der Ansprüche 1 bis 10, dadurch gekennzeichnet, daß man zunächst das Harz in wäßriger Lösung mit den feuerfesten Bestandteilen mischt, bis eine im wesentlichen homogene Mischung erhalten wird, und daß man nachfolgend hierzu den Katalysator in Form einer wäßrigen Lösung hinzumischt.

12. Verfahren nach einem der Ansprüche 10 oder 11, dadurch gekennzeichnet, daß der Trocknungsvorgang bei einer Temperatur von 15–50°C, vorzugsweise 20–35°C bewirkt wird, während ungefähr 24 Stunden und bis praktisch das gesamte freie Wasser entfernt ist.

13. Verfahren nach einem der Ansprüche 1 bis 12, dadurch gekennzeichnet, daß man feuerfeste Materialien verwendet, von denen 55–70 Gew.% von Körnern gebildet werden, die einen mittleren Durchmesser zwischen 1 und 6 mm aufweisen und von denen 30–45% von Körnern gebildet werden, die einen mittleren Durchmesser von weniger als 0,2 mm aufweisen, wobei 10 Gew.% der feuerfesten Bestandteile von Körnern gebildet werden, die einen mittleren Durchmesser zwischen 0,2 und 1 mm aufweisen.

14. Feuerfestes Erzeugnis, herstellbar nach dem Verfahren wie in einem der Ansprüche 1 bis 13 beschrieben.